# EUROPÄISCHE PATENTSCHRIFT

(11) **EP 1 440 854 B1**
(45) Veröffentlichungstag und Bekanntmachung des Hinweises auf die Patenterteilung: **14.10.2015**
(21) Anmeldenummer: 03027924.4
(22) Anmeldetag: 04.12.2003
(51) Int. Cl.: B60R 25/102, H04M 1/60, H04W 4/02, H04W 4/22, H04W 76/00, H04W 76/02, H04W 88/02, G08B 25/01, H04M 1/725

(54) **Verfahren und Vorrichtung zum automatischen Auswählen einer oder mehrerer anzuwählender Teilnehmerkennungen**
Method and device for automatic selection of one or several subscriber identifications
Méthode et dispositif de sélection automatique d'une ou plusieurs identifications d'abonnés

(30) Priorität: 21.01.2003 DE 10302407
(43) Veröffentlichungstag der Anmeldung: 28.07.2004
(73) Patentinhaber: Volkswagen Aktiengesellschaft, 38440 Wolfsburg (DE)
(72) Erfinder: Eisner, Georg, 38550 Isenbüttel (DE); Uteschil, Matthias, 38444 Wolfsburg (DE); Oberschachtsiek, André, 38518 Gifhorn (DE)
(74) Vertreter: Banzer, Hans-Jörg

(56) Entgegenhaltungen:
- EP-A- 0 574 006
- EP-A- 0 915 443
- EP-A- 1 168 872
- WO-A-95/00860
- DE-A1- 19 650 176
- PATENT ABSTRACTS OF JAPAN Bd. 017, Nr. 466 (E-1421), 25. August 1993 (1993-08-25) & JP 05 110492 A (SONY CORP), 30. April 1993 (1993-04-30)

## Beschreibung

Die Erfindung betrifft ein verfahren zum automatischen Auswählen einer oder mehrerer anzuwählender Teilnehmerkennungen, insbesondere Telefonnummern, aus einer Liste von Teilnehmerkennungen von Diensteanbietern und/oder Hilfsdiensten, welche in einer Speichereinrichtung abgelegt sind, welche über eine Verarbeitungseinrichtung mit einer Einrichtung zum Aufbau einer Kommunikationsverbindung, insbesondere einer Telefonverbindung, verbunden ist, sowie eine Vorrichtung zum automatischen Auswählen einer oder mehrerer anzuwählender Teilnehmerkennungen, insbesondere Telefonnummern, aus einer Liste von Teilnehmerkennungen von Diensteanbietern und/oder Hilfsdiensten, welche in einer Speichereinrichtung abgelegt sind, die über eine Verarbeitungseinrichtung mit einer Einrichtung zum Aufbau einer Kommunikationsverbindung, insbesondere einer Telefonverbindung, verbindbar und/oder verbunden ist.

Aus der europäischen Patentschrift EP 831 667 B1 ist eine Verbindungseinrichtung mit einer Telefoniereinrichtung und einer Steuereinrichtung für ein Kraftfahrzeug bekannt, wobei über die Steuereinrichtung nachrichtentechnische Einrichtungen und periphere Mess- und/oder Informationsgeber auf die Telefoniereinrichtung einwirken. Die Telefoniereinrichtung hat ein aus einer Aufnahmeeinrichtung herausnehmbares, eine Sprechkapsel und eine Hörmuschel aufweisendes Handfunktelefon. Die Aufnahmeeinrichtung weist auf ihrer Vorderseite Funktionstasten auf, deren Funktionen fahrzeugspezifisch ausgerichtet sind. So kann durch Betätigung einer Funktionstaste eine Notrufverbindung zu einem Hilfsdienst aufgebaut werden.

Des weiteren kann auch ein automatischer Verbindungsaufbau erfolgen. Die Steuereinrichtung weist dazu einen Rufnummernspeicher auf. In Abhängigkeit von fahrzeugspezifischen Mess- und Informationsdaten wird aus dem Rufnummernspeicher eine Rufnummer ausgewählt und eine entsprechende Verbindung zu einem Hilfsdienst aufgebaut. Beispielsweise wird eine automatische Verbindung bei einer Airbagauslösung hergestellt. Nach dem Feststellen der Airbagauslösung wird aus dem Rufnummernspeicher die Notfallnummer herausgesucht, die Verbindung hergestellt und entsprechende Daten an den Hilfsdienst gesendet. Zusätzlich wird eine Sprachkommunikationsverbindung zwischen Fahrzeug und Hilfsdienst aufgebaut. Eventuell verletzte Fahrzeuginsassen sind nun selbsttätig mit dem Hilfsdienst akustisch verbunden.

Des weiteren ist aus der europäischen Patentanmeldung EP 915 443 A2 eine Vorrichtung zum Aussenden von Notrufsignalen aus einem Kraftfahrzeug bekannt, die eine Mehrzahl von Sensoren zur Detektion von unerwünschten Ereignissen aufweist. Zusätzlich enthält sie ein Autotelefon, welches einen Rufnummernspeicher und eine Sendeeinheit zur Ausstrahlung von Notrufsignalen enthält, und eine Steuereinrichtung Im Rufnummernspeicher sind mehrere Notruftelefonnummern abgespeichert. In Abhängigkeit der Auswertung der Sensorsignale entscheidet die Steuereinrichtung, welche Rufnummer entsprechend der detektierten Situation angewählt wird. Wird beispielsweise ein Fahrzeugbrand detektiert, wird die Feuerwehr alarmiert. Dies kann entsprechend der Situation zusätzlich zu anderen Hilfsdiensten erfolgen oder alleinig.

Die EP 0 915 443 A2 beschreibt eine Vorrichtung zum Aussenden von Notrufsignalen aus einem Kraftfahrzeug mit einem Rufnummernspeicher zum Abspeichern mehrerer Notruftelefonnummern und einem Mikrocomputer zum Auswerten mehrerer fahrzeugeigener Sensoren. In Abhängigkeit von den von den Sensoren zur Verfügung gestellten Daten wählt der Mikrocomputer bei Bedarf eine der Notsituation entsprechende Notruftelefonnummer aus.

Die WO 95/00860 offenbart ein System zum automatischen Herbeiholen von Hilfe für eine Person mit einem Mobiltelefon. Das System weist eine Lokalisierungseinrichtung auf, über welche die Position des Mobiltelefons festgestellt werden kann, so dass ein ausgesendetes Notrufsignal automatisch an die nächstgelegene Rettungsstelle weitergeleitet wird.

In der EP 1 168 872 A1 ist ein Mobiltelefon beschrieben, in welches der Benutzer mindestens eine von ihm beherrschte Sprache eingeben kann. Im Falle eines Notrufs wird automatisch eine entsprechende Sprachinformation an einen Notrufempfänger mitausgesendet. Ein Notrufempfänger, der diese Sprache nicht versteht, hat somit die Möglichkeit, das Telefongespräche an eine Person weiterzuleiten, der diese Sprache geläufig ist.

Die EP 0 574 006 A1 offenbart ein Gerät, welches über eine darin eingefügte IC-Karte erkennt, welche Sprache einem Benutzer des Geräts geläufig ist. Anschließend werden Sprachanzeigen an den Benutzer in dieser Sprache angezeigt.

Die DE 196 50 176 A1 und die JP 05 11 04 92 beschreiben Kommunikationseinrichtungen mit je einem Übersetzungsprogramm, so dass im Notfall ausgesendete Daten in die Sprache des Aufenthaltslandes übersetzt werden oder Serviceinformationen in der Muttersprache eines Benutzers empfangen werden können.

Die Aufgabe der Erfindung besteht darin, ein Verfahren und eine Vorrichtung zum Auswählen eines oder mehrerer Diensteanbieter und/oder Hilfsdienste zu schaffen, sodass einem Benutzer in einer Notsituation auch im Ausland schnell eine Gesprächsverbindung mit einem geeigneten Gesprächspartner zur Verfügung steht.

Die Aufgabe wird erfindungsgemäß mit den Merkmalen der Patentansprüche 1 und 9 gelöst. Vorteilhafte Aus- und Weiterbildungen sind in den Unteransprüchen dargestellt.

Gemäß der Erfindung ist vorgesehen, dass die Auswahl der anzuwählenden Teilnehmerkennung eines Diensteanbieters und/oder Hilfsdienstes zumindest in Abhängigkeit einer Sprachenvorgabe erfolgt. Über die Information der Sprachenvorgabe kann entsprechend ein Diensteanbieter und/oder Hilfsdienst ausgewählt werden, mit dem der Anrufer in seiner bzw. der vorgegebenen Sprache kommunizieren kann.

Weiterhin weist entweder die Einrichtung zum Aufbau einer Kommunikationsverbindung oder die mit ihr verbundene Verarbeitungseinrichtung eine Einrichtung zur Identifizierung eines Nutzers auf. In heute für diesen Zweck genutzten Mobilfunkeinrichtungen ist dies beispielsweise eine eingelegte SIM-Karte (Subscriber Identy Module). Anhand der Einrichtung zur Identifizierung eines Nutzers, die für ein bestimmtes Kommunikationsnetz eines Landes zugelassen ist, erfolgt gemäß der Ausbildung der Erfindung, die entsprechende Sprachvorgabe. Eine andere Möglichkeit besteht in der manuellen Eingabe oder Auswahl von abgespeicherten Sprachen, eine Sprache für die Sprachvorgabe auszuwählen. Andere Möglichkeiten der Sprachvorgabe sind denkbar.

Der Standort der Einrichtung zum Aufbau einer Kommunikationsverbindung bzw. des Nutzers bzw. einer mobilen Einrichtung, in der die Einrichtung zum Aufbau einer Kommunikationsverbindung angeordnet ist, wird nach einer Ausbildung der Erfindung über eine Positionserfassungseinrichtung, beispielsweise eine satellitengestützte Positionserfassungseinrichtung ermittelt, die die Positionsdaten entweder der Einrichtung zum Aufbau einer Kommunikationseinrichtung oder der Verarbeitungseinrichtung übergibt. Eine andere Möglichkeit der Standortermittlung besteht darin, dass die Position über die Anmeldung der Einrichtung zur Identifizierung eines Nutzers in einem bestimmten Kommunikationsnetz ermittelt wird. Dabei sieht eine Weiterbildung der Erfindung vor, dass die Position über die Anmeldung in einem standortabhängigen Teil des Kommunikationsnetzes festgestellt wird.

Nach einer Weiterbildung der Erfindung ist die Einrichtung zum Aufbau einer Kommunikationsverbindung direkt und/oder über die Verarbeitungseinrichtung mit mindestens einem Mess- und/oder Informationsdatengeber verbunden und die Auswahl der anzuwählenden Teilnehmerkennung erfolgt zusätzlich in Abhängigkeit der Daten des mindestens einen Mess- und/oder Informationsgebers. Ist der Mess- und/oder Informationsgeber bei dem Einsatz der erfindungsgemäßen Vorrichtung beispielsweise ein Diagnosesystem, dass einen solch gravierenden Fehler am Fahrzeug feststellt, dass es nicht mehr fahrbereit ist, könnte sofort ein automatischer Verbindungsaufbau zu einem Abschleppdienst erfolgen, bei einem geringeren Fehler könnte der Verbindungsaufbau zu einem Reparaturdienst erfolgen, der das Fahrzeug noch vor Ort reparieren kann. Hier sind die unterschiedlichsten Einsatzfälle und Situationen denkbar.

Die Auslösung der automatischen Auswahl der Teilnehmerkennung und der automatische Aufbau der Kommunikationsverbindung kann einmal in Abhängigkeit der Daten mindestens eines Mess- und/oder Informationsgebers, der mit der Einrichtung zum Aufbau einer Kommunikationseinrichtung oder der Verarbeitungseinrichtung verbunden ist, erfolgen oder durch eine manuelle Auslösung, beispielsweise durch die Betätigung mindestens eines dafür vorgesehenen Betätigungselementes.

Eine Ausbildung der Erfindung sieht vor, dass nach einem erfolgten Aufbau einer Kommunikationsverbindung zwischen der Einrichtung zum Aufbau einer Kommunikationsverbindung und einem Diensteanbieter und/oder Hilfsdienstes Daten von mit der Einrichtung zum Aufbau der Kommunikationsverbindung verbundenen Messund/oder Informationsgebern zu dem Diensteanbieter und/oder Hilfsdienst gesendet werden und/oder eine Sprachkommunikationsverbindung aufgebaut wird.

Nach einer vorteilhaften Ausbildung der erfindungsgemäßen Vorrichtung in einem Kraftfahrzeug ist die Einrichtung zum Aufbau einer Kommunikationsverbindung ein in einer Aufnahmeeinrichtung angeordnetes bzw. anordbares Handfunktelefon. Vorzugsweise weist dabei die Aufnahmeeinrichtung das mindestens eine Betätigungselement zur manuellen Auslösung einer automatischen Auswahl der Teilnehmerkennung (Telefonnummer) und eines automatischen Aufbaus einer Kommunikationsverbindung (Telefonverbindung zu der ausgewählten Teilnehmerkennung auf.

Es soll ausdrücklich erwähnt werden, dass die Erfindung nicht auf die Auswahl von Telefonnummern und den Aufbau einer Telefonverbindung beschränkt ist. Sie umfasst auch den Aufbau von Kommunikationsverbindungen über andere Medien.

Nachfolgend soll die Erfindung anhand eines Ausführungsbeispieles näher beschrieben werden.
- Fig. 1:: die schematische Darstellung einer erfindungsgemäßen Vorrichtung in einem Kraftfahrzeug und
- Fig. 2:: eine perspektivische Darstellung der Einrichtung zum Aufbau einer Kommunikationseinrichtung in einem Kraftfahrzeug

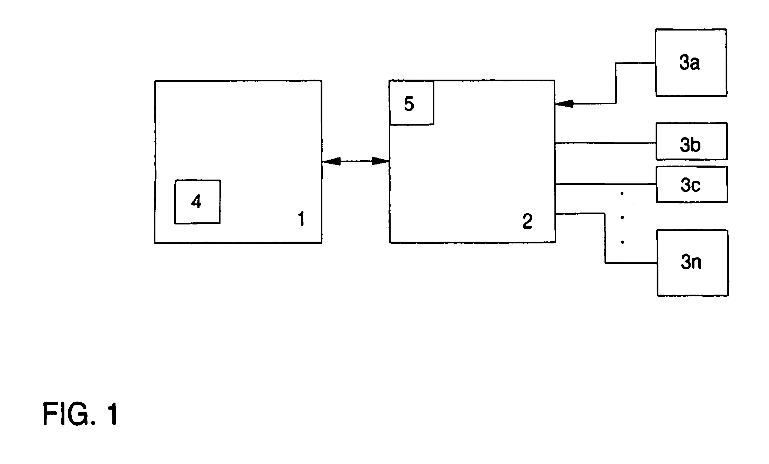

Die in Fig. 1 gezeigte Vorrichtung weist eine als Mobilfunktelefon ausgebildete Einrichtung 1 zum Aufbau einer Kommunikationsverbindung in einem Mobilfunknetz sowie eine Verarbeitungseinrichtung 2, die mit unterschiedlichen Mess- und Informationsgebern 3a...3n des Kraftfahrzeuges verbunden ist bzw. Daten der Messund Informationsgeber 3a...3n über ein fahrzeuginternes Datenbussystem erhält. Beispielsweise könnten einer oder mehrere der Mess- und Informationsgeber ein Crashsensor 3a sowie Einrichtungen zur Erfassung und Speicherung von Fahrzeugdaten 3b ein. Des weiteren kann vorgesehen sein, dass eine Einrichtung 3c zur Erfassung der Fahrzeugposition mit der Verarbeitungseinrichtung verbunden ist bzw. seine Daten der Verarbeitungseinrichtung 2 über den fahrzeuginternen Datenbus zugeleitet werden. Das Mobilfunktelefon 1 weist bzw. ist in diese einlegbar eine als sogenannte SIM-Karte ausgebildete Einrichtung 4 zur Identifizierung eines Nutzers auf, mit deren Hilfe das Mobilfunktelefon in das jeweilige Mobilfunknetz eingeloggt wird. In der Verarbeitungseinrichtung 2 ist weiterhin eine Speichereinrichtung 5 zum Speichern der verschiedenen Telefonnummern von Diensteanbietern und/oder Hilfsdiensten vorgesehen. Dabei sind nicht nur Telefonnummern von unterschiedlichen Diensteanbietern und/oder Hilfsdiensten, wie zum Beispiel einer Notrufzentrale für Unfälle, der Feuerwehr, der Polizei, einem Pannennotdienst oder einer Informationszentrale, sondern auch für zumindest einige der Diensteanbieter und/oder Hilfsdiensten unterschiedliche Telefonnummern für unterschiedliche Regionen oder Länder und/oder Telefonnummern mit einer Unterstützung in unterschiedlichen Sprachen.

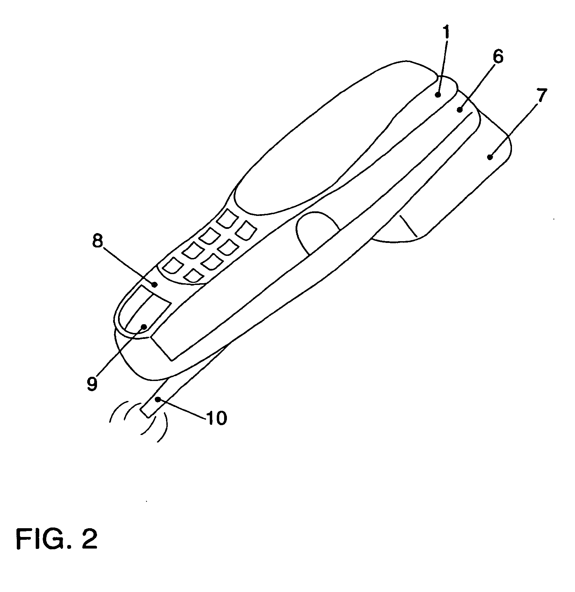

Fig. 2 zeigt eine perspektivische Darstellung eines als Einrichtung zum Aufbau einer Kommunikationseinrichtung verwendeten Mobilfunktelefon 1 in einem Kraftfahrzeug. Dazu ist das Mobilfunktelefon 1 in eine Aufnahmeeinrichtung 6 eingelegt, die auch die elektrische bzw. elektronische Verbindung 10 zwischen der im Kraftfahrzeug befindlichen Verarbeitungseinrichtung 2 und dem Mobilfunktelefon 1 herstellt. Die Aufnahmeeinrichtung 6 ist über eine Adaptereinrichtung 7 an einem nicht dargestellten Bauteil des Kraftfahrzeuges befestigt. Zusätzlich weist die Aufnahmeeinrichtung auf ihrer dem Fahrzeuginnenraum zugewandten Seite zwei als Funktionstasten ausgebildete Betätigungselemente 8, 9 auf, die gegebenenfalls vor einer ungewollten Betätigung geschützt sind. Die Funktionstasten 8, 9 dienen zur manuellen Auslösung einer automatischen Anwahl eines Diensteanbieters und/oder Hilfsdienstes. Über die Betätigung der Funktionstaste 8 kann beispielsweise ein Pannennotdienst und über die Funktionstaste 9 eine Notrufzentrale oder die Polizei angewählt werden.

Nachfolgend soll die Funktionsweise der erfindungsgemäßen Vorrichtung näher beschrieben werden. Wird ein automatischer Anruf eines Diensteanbieters oder Hilfsdienstes ausgelöst, sei es, von einem Mess- oder Informationsdatengeber 3a...3n des Kraftfahrzeuges, beispielsweise dem Crashsensor 3a, oder durch eine manuelle Auslösung über eine der Funktionstasten 8 oder 9, wird von der Verarbeitungseinrichtung 2 entschieden, welche Art von Diensteanbieter oder Hilfsdienst automatisch angewählt werden soll. Danach wird der Standort des Fahrzeuges bzw. des Mobilfunktelefons 1 festgestellt. Im einfachsten Fall geschieht dies, über das Mobilfunknetz, in den sich die Einrichtung 4 zur Identifizierung des Nutzers eingeloggt hat, hiermit ist zumindest das Land des Standortes feststellbar. Eine andere Möglichkeit besteht darin, die Position des Kraftfahrzeuges über eine Einrichtung 3c zur Positionserfassung, insbesondere eine satellitengestützte Positionserfassungseinrichtung, zu ermitteln. Danach wird die Kommunikationssprache zwischen dem Nutzer des Mobilfunktelefons und dem Diensteanbieter und/oder Hilfsdienst ermittelt. Auch hier stehen mehrere Möglichkeiten zur Verfügung. Erfindungsgemäß wird darüber, für welches Mobilfunknetz die hier als SIM-Karte ausgebildete Einrichtung zur Identifizierung des Nutzers ursprünglich zugelassen ist, festgestellt, aus welchem Land sie stammt und dessen Sprache als Sprachvorgabe gewählt werden. Eine andere Möglichkeit, welche nicht der beanspruchten Erfindung entspricht, besteht darin, mögliche Sprachen in einem Speicher abzulegen, wobei der Nutzer eine Sprache als Sprachvorgabe, beispielsweise vor Antritt der Fahrt, vorgeben kann. In Abhängigkeit der ermittelten Daten wird nun von der Verarbeitungseinrichtung 2 aus der Speichereinrichtung 5 die entsprechende Telefonnummer des Diensteanbieters und/oder Hilfsdienstes ausgewählt und automatisch eine Kommunikationsverbindung zu ihm aufgebaut. Dabei kann sowohl vorgesehen sein, gegebenenfalls in Abhängigkeit der Art des Diensteanbieters und/oder Hilfsdienstes, dass über die Kommunikationsverbindung automatisch Daten der Mess- und Informationsdatengeber vom Kraftfahrzeug zum Diensteanbieter und/oder Hilfsdienst gesendet werden und/oder dass eine Sprachkommunikationsverbindung zwischen dem Kraftfahrzeug und dem Diensteanbieter und/oder dem Hilfsdienst aufgebaut wird.

## Patentansprüche

1. Verfahren zum automatischen Auswählen einer oder mehrerer anzuwählender Teilnehmerkennungen aus einer Liste von Teilnehmerkennungen von Diensteanbietern und/oder Hilfsdiensten, welche in einer Speichereinrichtung (5) abgelegt sind, welche über eine Verarbeitungseinrichtung (2) mit einer Einrichtung (1) zum Aufbau einer Kommunikationsverbindung verbunden ist, wobei die Auswahl der anzuwählenden Teilnehmerkennung eines Diensteanbieters und/oder Hilfsdienstes zumindest in Abhängigkeit einer Sprachenvorgabe erfolgt, wobei die Sprachenvorgabe durch Abspeicherung einer Vorgabe in einer Speichereinrichtung der Einrichtung (1) zum Aufbau einer Kommunikationsverbindung und/oder der Verarbeitungseinrichtung (2) erfolgt, wobei über die Sprachenvorgabe ein Diensteanbieter und/oder Hilfsdienst entsprechend ausgewählt werden kann, mit dem ein Anrufer in seiner bzw. einer vorgegebenen Sprache kommunizieren kann, **dadurch gekennzeichnet, dass** die Einrichtung (1) zum Aufbau einer Kommunikationsverbindung oder die Verarbeitungseinrichtung (2) eine Einrichtung (4) zur Identifizierung eines Nutzers aufweist, mittels derer eine Kommunikationsverbindung automatisch freischaltbar ist und/oder freigeschaltet wird, und die Sprachvorgabe durch Ermittlung der Sprache des Landes eines Mobilfunknetzes, für welches die Einrichtung zur Identifizierung des Nutzer ursprünglich zugelassen ist, erfolgt.

2. Verfahren nach Anspruch 1, **dadurch gekennzeichnet, dass** die Auswahl der anzuwählenden Teilnehmerkennung eines Diensteanbieters und/oder Hilfsdienstes in zusätzlicher Abhängigkeit des Standortes der Einrichtung zum Aufbau einer Kommunikationsverbindung erfolgt, wobei der Standort der Einrichtung (1) zum Aufbau einer Kommunikationsverbindung über eine Positionserfassungseinrichtung (3c) ermittelt wird.

3. Verfahren nach Anspruch 1, **dadurch gekennzeichnet, dass** die Auswahl der anzuwählenden Teilnehmerkennung eines Diensteanbieters und/oder Hilfsdienstes in zusätzlicher Abhängigkeit des Standortes der Einrichtung zum Aufbau einer Kommunikationsverbindung erfolgt, wobei der Standort der Einrichtung (1) zum Aufbau einer Kommunikationsverbindung über die Anmeldung der Einrichtung (4) zur Identifizierung eines Nutzers in einem Kommunikationsnetz ermittelt wird.

4. Verfahren nach Anspruch 3, **dadurch gekennzeichnet, dass** die Position über die Anmeldung in einem standortabhängigen Teil des Kommunikationsnetzes ermittelt wird.

5. Verfahren nach einem der Ansprüche 1 bis 4, **dadurch gekennzeichnet, dass** die Einrichtung (1) zum Aufbau einer Kommunikationsverbindung direkt und/oder über die Verarbeitungseinrichtung (2) mit mindestens einem Mess- und/oder Informationsdatengeber (3a...3n) verbunden ist und die Auswahl der anzuwählenden Teilnehmerkennung zusätzlich in Abhängigkeit der Daten des mindestens einen Mess- und/oder Informationsgebers (3a... 3n) erfolgt.

6. Verfahren nach einem der Ansprüche 1 bis 5, **dadurch gekennzeichnet, dass** die Einrichtung (1) zum Aufbau einer Kommunikationsverbindung direkt und/oder über die Verarbeitungseinrichtung (2) mit mindestens einem Mess- und/oder Informationsdatengeber (3a...3n) verbunden ist und eine automatische Auswahl einer Teilnehmerkennung und ein automatischer Aufbau der Kommunikationsverbindung zu der automatisch ausgewählten Teilnehmerkennung in Abhängigkeit von Daten des mindestens einen Mess- und/oder Informationsdatengebers (3a...3n) erfolgt.

7. Verfahren nach einem der Ansprüche 1 bis 6, **dadurch gekennzeichnet, dass** eine automatische Auswahl einer Teilnehmerkennung und ein automatischer Aufbau einer Kommunikationsverbindung zu der ausgewählten Teilnehmerkennung in Abhängigkeit einer manuellen Auslösung erfolgt.

8. Verfahren nach Anspruch 6 oder 7, **dadurch gekennzeichnet, dass** Daten des mindestens einen Mess- und/oder Informationsdatengebers (3a...3n) nach einem automatischen Aufbau der Kommunikationsverbindung an den Diensteanbieter und/oder den Hilfsdienst gesendet werden und/oder eine Sprachkommunikationsverbindung aufgebaut wird.

9. Vorrichtung zum automatischen Auswählen einer oder mehrerer anzuwählender Teilnehmerkennungen aus einer Liste von Teilnehmerkennungen von Diensteanbietern und/oder Hilfsdiensten, welche in einer Speichereinrichtung (5) abgelegt sind, die über eine Verarbeitungseinrichtung (2) mit einer Einrichtung (1) zum Aufbau einer Kommunikationsverbindung verbindbar ist, wobei die Verarbeitungseinrichtung (2) derart ausgebildet ist, dass die Auswahl der anzuwählenden Teilnehmerkennung eines Diensteanbieters und/oder Hilfsdienstes zumindest in Abhängigkeit einer Sprachenvorgabe durchführbar ist, wobei die Sprachenvorgabe durch Abspeicherung einer Vorgabe in einer Speichereinrichtung der Einrichtung (1) zum Aufbau einer Kommunikationsverbindung und/oder der Verarbeitungseinrichtung (2) erfolgt, wobei über die Sprachenvorgabe ein Diensteanbieter und/oder Hilfsdienst entsprechend ausgewählt werden kann, mit dem ein Anrufer in seiner bzw. einer vorgegebenen Sprache kommunizieren kann, **dadurch gekennzeichnet, dass** die Einrichtung (1) zum Aufbau einer Kommunikationsverbindung oder die Verarbeitungseinrichtung (2) eine Einrichtung zur Identifizierung eines Nutzers aufweist und/oder mit dieser versehbar ist, wobei mittels der Einrichtung (4) zur Identifizierung eines Nutzers eine Kommunikationsverbindung automatisch freischaltbar ist und/oder freigeschaltet wird, und die Sprachvorgabe durch Ermittlung der Sprache des Landes eines Mobilfunknetzes, für welches die Einrichtung zur Identifizierung des Nutzer ursprünglich zugelassen ist, erfolgt.

10. Vorrichtung nach Anspruch 9, **dadurch gekennzeichnet, dass** die Auswahl der anzuwählenden Teilnehmerkennung eines Diensteanbieters und/oder Hüfsdienstes in zusätzlicher Abhängigkeit des Standortes der Einrichtung (1) zum Aufbau einer Kommunikationsverbindung erfolgt, wobei die Verarbeitungseinrichtung (2) mit einer Positionserfassungseinrichtung (3c) verbunden ist und der Standort der Einrichtung (1) zum Aufbau einer Kommunikationsverbindung von der Positionserfassungseinrichtung (3c) ermittelbar ist und/oder ermittelt wird.

11. Vorrichtung nach Anspruch 9, **dadurch gekennzeichnet, dass** die Auswahl der anzuwählenden Teilnehmerkennung eines Diensteanbieters und/oder Hilfsdienstes in zusätzlicher Abhängigkeit des Standortes der Einrichtung (1) zum Aufbau einer Kommunikationsverbindung erfolgt, wobei die Verarbeitungseinrichtung (2) derart ausgebildet ist, dass der Standort der Einrichtung (1) zum Aufbau einer Kommunikationsverbindung über die Anmeldung der Einrichtung (4) zur Identifizierung eines Nutzers in einem Kommunikationsnetz erfolgt.

12. Vorrichtung nach Anspruch 11, **dadurch gekennzeichnet, dass** die Position über die Anmeldung in einem standortabhängigen Teil des Kommunikationsnetzes erfolgt.

13. Vorrichtung nach einem der Ansprüche 9 bis 12, **dadurch gekennzeichnet, dass** die Einrichtung (1) zum Aufbau einer Kommunikationsverbindung direkt und/oder über die Verarbeitungseinrichtung (2) mit mindestens einem Mess- und/oder Informationsdatengeber (3a...3n) verbunden ist und die Verarbeitungseinrichtung (2) derart ausgebildet ist, dass die Auswahl der anzuwählenden Teilnehmerkennung zusätzlich in Abhängigkeit der Daten mindestens eines Mess- und/oder Informationsgebers (3a...3n) erfolgt.

14. Vorrichtung nach einem der Ansprüche 9 bis 13, **dadurch gekennzeichnet, dass** die Einrichtung (1) zum Aufbau einer Kommunikationsverbindung direkt und/oder über die Verarbeitungseinrichtung (2) mit mindestens einem Mess- und/oder Informationsdatengeber (3a...3n) verbunden ist und die Verarbeitungseinrichtung (2) derart ausgebildet ist, dass eine automatische Auswahl einer Teilnehmerkennung und ein automatischer Aufbau einer Kommunikationsverbindung zu der automatisch ausgewählten Teilnehmerkennung in Abhängigkeit von Daten des mindestens einen Mess- und/oder Informationsdatengebers (3a...3n) erfolgt.

15. Vorrichtung nach einem der Ansprüche 9 bis 14, **dadurch gekennzeichnet, dass** die Einrichtung (1) zum Aufbau einer Kommunikationsverbindung mindestens ein manuelles Betätigungselement (8,9) aufweist und/oder mit diesem direkt oder indirekt verbunden ist und eine automatische Auswahl einer Teilnehmerkennung und ein automatischer Aufbau einer Kommunikationsverbindung zu der ausgewählten Teilnehmerkennung in Abhängigkeit der Betätigung des Betätigungselementes (8,9) erfolgt.

16. Vorrichtung nach Anspruch 13 oder 14, **dadurch gekennzeichnet**, das Daten des mindestens einen Mess- und/oder Informationsgebers (3a...3n) nach einem automatischen Aufbau einer Kommunikationsverbindung an den Diensteanbieter und/oder den Hilfsdienst gesendet werden und/oder eine Sprachkommunikationsverbindung aufgebaut wird.

17. Vorrichtung nach einem der Ansprüche 9 bis 16, **dadurch gekennzeichnet, dass** sie in einem Kraftfahrzeug vorgesehen ist.

18. Vorrichtung nach Anspruch 17, **dadurch gekennzeichnet, dass** als mindestens ein Mess- und/oder Informationsdatengeber (3a) mindestens eine Einrichtung zur Erfassung eines Fahrzeugcrashs vorgesehen ist.

19. Vorrichtung nach Anspruch 17 oder 18, **dadurch gekennzeichnet, dass** die Einrichtung (1) zum Aufbau einer Kommunikationsverbindung ein in einer Aufnahmeeinrichtung (6) angeordnetes Handfunktelefon ist und die Aufnahmeeinrichtung (6) das mindestens eine Betätigungselement (8,9) zur manuellen Auslösung einer automatischen Auswahl der Teilnehmerkennung und eines automatischen Aufbaus einer Kommunikationsverbindung zu der ausgewählten Teilnehmerkennung aufweist.

## Claims

1. Method for automatically selecting one or more dialable subscriber identifiers from a list of subscriber identifiers for service providers and/or emergency services that are stored in a memory device (5) that is connected via a processing device (2) to a device (1) for setting up a communication link, wherein the dialable subscriber identifier of a service provider and/or emergency service is selected at least on the basis of a language specification, wherein the language specification is provided by storing a specification in a memory device of the device (1) for setting up a communication link and/or the processing device (2), wherein the language specification can be used to appropriately select a service provider and/or emergency service with which a caller can communicate in his or a prescribed language, **characterized in that** the device (1) for setting up a communication link or the processing device (2) has a device (4) for identifying a user that can be used and/or is used to automatically enable a communication link, and the language specification is provided by ascertaining the language of the country of a mobile radio network for which the device for identifying the user was originally licensed.

2. Method according to Claim 1, **characterized in that** the dialable subscriber identifier of a service provider and/or emergency service is selected additionally on the basis of the location of the device for setting up a communication link, wherein the location of the device (1) for setting up a communication link is ascertained by means of a position finding device (3c).

3. Method according to Claim 1, **characterized in that** the dialable subscriber identifier of a service provider and/or emergency service is selected additionally on the basis of the location of the device for setting up a communication link, wherein the location of the device (1) for setting up a communication link is ascertained by means of the registration of the device (4) for identifying a user in a communication network.

4. Method according to Claim 3, **characterized in that** the position is ascertained by means of the registration in a location-dependent part of the communication network.

5. Method according to one of Claims 1 to 4, **characterized in that** the device (1) for setting up a communication link is connected directly and/or via the processing device (2) to at least one measurement and/or information data transmitter (3a ... 3n) and the dialable subscriber identifier is selected additionally on the basis of the data from the at least one measurement and/or information transmitter (3a ... 3n).

6. Method according to one of Claims 1 to 5, **characterized in that** the device (1) for setting up a communication link is connected directly and/or via the processing device (2) to at least one measurement and/or information data transmitter (3a ... 3n) and a subscriber identifier is automatically selected, and the communication link to the automatically selected subscriber identifier is automatically set up, on the basis of data from the at least one measurement and/or information data transmitter (3a ... 3n).

7. Method according to one of Claims 1 to 6, **characterized in that** a subscriber identifier is automatically selected, and a communication link to the selected subscriber identifier is automatically set up, on the basis of manual initiation.

8. Method according to Claim 6 or 7, **characterized in that** data from the at least one measurement and/or information data transmitter (3a ... 3n) are sent to the service provider and/or the emergency service following automatic set-up of the communication link and/or a voice communication link is set up.

9. Apparatus for automatically selecting one or more dialable subscriber identifiers from a list of subscriber identifiers for service providers and/or emergency services that are stored in a memory device (5) that can be connected via a processing device (2) to a device (1) for setting up a communication link, wherein the processing device (2) is in a form such that the selection of the dialable subscriber identifier of a service provider and/or emergency service can be performed at least on the basis of a language specification, wherein the language specification is provided by storing a specification in a memory device of the device (1) for setting up a communication link and/or the processing device (2), wherein the language specification can be used to appropriately select a service provider and/or emergency service with which a caller can communicate in his or a prescribed language, **characterized in that** the device (1) for setting up a communication link or the processing device (2) has a device for identifying a user and/or can be provided therewith, wherein the device (4) for identifying a user can be used and/or is used to automatically enable a communication link, and the language specification is provided by ascertaining the language of the country of a mobile radio network for which the device for identifying the user was originally licensed.

10. Apparatus according to Claim 9, **characterized in that** the dialable subscriber identifier of a service provider and/or auxiliary service is selected additionally on the basis of the location of the device (1) for setting up a communication link, wherein the processing device (2) is connected to a position finding device (3c) and the location of the device (1) for setting up a communication link can be ascertained and/or is ascertained by the position finding device (3c).

11. Apparatus according to Claim 9, **characterized in that** the dialable subscriber identifier of a service provider and/or emergency service is selected additionally on the basis of the location of the device (1) for setting up a communication link, wherein the processing device (2) is in a form such that the location of the device (1) for setting up a communication link is provided by means of the registration of the device (4) for identifying a user in a communication network.

12. Apparatus according to Claim 11, **characterized in that** the position is provided by means of the registration in a location-dependent part of the communication network.

13. Apparatus according to one of Claims 9 to 12, **characterized in that** the device (1) for setting up a communication link is connected directly and/or via the processing device (2) to at least one measurement and/or information data transmitter (3a ... 3n) and the processing device (2) is in a form such that the dialable subscriber identifier is selected additionally on the basis of the data from at least one measurement and/or information transmitter (3a ... 3n).

14. Apparatus according to one of Claims 9 to 13, **characterized in that** the device (1) for setting up a communication link is connected directly and/or via the processing device (2) to at least one measurement and/or information data transmitter (3a ... 3n) and the processing device (2) is in a form such that a subscriber identifier is automatically selected, and a communication connection to the automatically selected subscriber identifier is automatically set up, on the basis of data from the at least one measurement and/or information data transmitter (3a ... 3n).

15. Apparatus according to one of Claims 9 to 14, **characterized in that** the device (1) for setting up a communication link has at least one manual operating element (8, 9) and/or is directly or indirectly connected thereto and a subscriber identifier is automatically selected, and a communication link to the selected subscriber identifier is automatically set up, on the basis of the operation of the operating element (8, 9).

16. Apparatus according to Claim 13 or 14, **characterized in that** data from the at least one measurement and/or information transmitter (3a ... 3n) are sent to the service provider and/or the emergency service following automatic set-up of the communication link and/or a voice communication link is set up.

17. Apparatus according to one of Claims 9 to 16, **characterized in that** it is provided in a motor vehicle.

18. Apparatus according to Claim 17, **characterized in that** the at least one measurement and/or information data transmitter (3a) provided is at least one device for detecting a vehicle crash.

19. Apparatus according to Claim 17 or 18, **characterized in that** the device (1) for setting up a communication link is a hand-held radio telephone arranged in a holding device (6) and the holding device (6) has the at least one operating element (8, 9) for manual initiation of automatic selection of the subscriber identifier and automatic set-up of a communication link to the selected subscriber identifier.

## Revendications

1. Procédé de sélection automatique d'un ou de plusieurs identifiants d'abonnés de numérotation à partir d'une liste d'identifiants d'abonnés de fournisseurs de services et/ou de services auxiliaires qui sont stockés dans un dispositif de mémoire (5), pouvant être connecté par l'intermédiaire d'un dispositif de traitement (2) à un dispositif (1) destiné à établir une liaison de communication, dans lequel la sélection de l'identifiant d'abonné de numérotation d'un fournisseur de services et/ou d'un service auxiliaire est effectuée au moins en fonction d'une préférence de langue, dans lequel la préférence de langue est effectuée par stockage en mémoire d'une préférence dans un dispositif de mémoire du dispositif (1) destiné à établir une liaison de communication et/ou du dispositif de traitement (2), dans lequel on peut sélectionner de manière correspondante par l'intermédiaire de la préférence de langue un fournisseur de services et/ou un service auxiliaire avec lequel un appelant peut communiquer dans sa ou une langue préférée, **caractérisé en ce que** le dispositif (1) destiné à établir une liaison de communication ou le dispositif de traitement (2) comporte un dispositif (4) destiné à identifier un utilisateur, au moyen duquel une liaison de communication peut être et/ou est automatiquement libérée, et la préférence de langue est effectuée par obtention de la langue du pays d'un réseau mobile pour lequel le dispositif est initialement autorisé à identifier l'utilisateur.

2. Procédé selon la revendication 1, **caractérisé en ce que** la sélection de l'identifiant d'abonné de numérotation d'un fournisseur de services et/ou d'un service auxiliaire s'effectue en outre en fonction du lieu géographique du dispositif destiné à établir une liaison de communication, dans lequel le lieu géographique du dispositif (1) destiné à établir une liaison de communication est obtenu au moyen d'un dispositif de détection de position (3c).

3. Procédé selon la revendication 1, **caractérisé en ce que** la sélection de l'identifiant d'abonné de numérotation d'un fournisseur de services et/ou d'un service auxiliaire s'effectue en outre en fonction du lieu géographique du dispositif destiné à établir une liaison de communication, dans lequel le lieu géographique du dispositif (1) destiné à établir une liaison de communication est obtenu par l'intermédiaire de l'enregistrement du dispositif (4) destiné à identifier l'utilisateur sur un réseau de communication.

4. Procédé selon la revendication 3, **caractérisé en ce que** la position est déterminée par l'intermédiaire de l'enregistrement sur une partie du réseau de communication qui dépend du lieu géographique.

5. Procédé selon l'une quelconque des revendications 1 à 4, **caractérisé en ce que** le dispositif (1) destiné à établir une liaison de communication est connecté à au moins un générateur de données de mesure et/ou d'informations (3a...3n) directement et/ou par l'intermédiaire du dispositif de traitement (2) et **en ce que** la sélection de l'identifiant d'abonné de numérotation s'effectue en outre en fonction des données de l'au moins un générateur de données de mesure et/ou d'informations (3a...3n).

6. Procédé selon l'une quelconque des revendications 1 à 5, **caractérisé en ce que** le dispositif (1) destiné à établir une liaison de communication est connecté à au moins un générateur de données de mesure et/ou d'informations (3a...3n) directement et/ou par l'intermédiaire du dispositif de traitement (2) et **en ce qu'**une sélection automatique d'un identifiant d'abonné et un établissement automatique de la liaison de communication vers l'identifiant d'abonné numéroté sont effectués en fonction de données de l'au moins un générateur de données de mesure et/ou d'informations (3a...3n).

7. Procédé selon l'une quelconque des revendications 1 à 6, **caractérisé en ce qu'**une sélection automatique d'un identifiant d'abonné et un établissement automatique d'une liaison de communication sont effectués vers l'identifiant d'abonné numéroté en fonction d'un déclenchement manuel.

8. Procédé selon la revendication 6 ou 7, **caractérisé en ce que** des données de l'au moins un générateur de données de mesure et/ou d'informations (3a...3n) sont envoyées, après un établissement automatique de la liaison de communication, au fournisseur de services et/ou au service auxiliaire et/ou **en ce qu'**une liaison de communication vocale est établie.

9. Dispositif de sélection automatique d'un ou de plusieurs identifiants d'abonnés de numérotation à partir d'une liste d'identifiants d'abonnés de fournisseurs de services et/ou de services auxiliaires qui sont stockés dans un dispositif de mémoire (5), pouvant être connecté à un dispositif (1) destiné à établir une liaison de communication par l'intermédiaire d'un dispositif de traitement (2), dans lequel le dispositif de traitement (2) est conçu de manière à ce que la sélection de l'identifiant d'abonné de numérotation d'un fournisseur de services et/ou d'un service auxiliaire puisse être effectué au moins en fonction d'une préférence de langue, dans lequel la préférence de langue est effectuée par stockage en mémoire d'une préférence dans un dispositif de mémoire du dispositif (1) destiné à établir une liaison de communication et/ou du dispositif de traitement (2), dans lequel on peut sélectionner de manière correspondante par l'intermédiaire de la préférence de langue un fournisseur de services et/ou un service auxiliaire avec lequel un appelant peut communiquer dans sa ou une langue préférée, **caractérisé en ce que** le dispositif (1) destiné à établir une liaison de communication ou le dispositif de traitement (2) comporte un dispositif destiné à identifier un utilisateur et/ou peut être pourvu de celui-ci, dans lequel une liaison de communication peut être et/ou est automatiquement libérée au moyen du dispositif (4) destiné à identifier un utilisateur, et la préférence de langue est effectuée par obtention de la langue du pays d'un réseau mobile pour lequel le dispositif est initialement autorisé à identifier l'utilisateur.

10. Dispositif selon la revendication 9, **caractérisé en ce que** la sélection de l'identifiant d'abonné de numérotation d'un fournisseur de services et/ou d'un service auxiliaire s'effectue en outre en fonction du lieu géographique du dispositif (1) destiné à établir une liaison de communication, dans lequel le dispositif de traitement (2) est connecté à un dispositif de détection de position (3c) et le lieu géographique du dispositif (1) destiné à établir une liaison de communication peut être obtenu ou est obtenu par le dispositif de détection de position (3c).

11. Dispositif selon la revendication 9, **caractérisé en ce que** la sélection de l'identifiant d'abonné de numérotation d'un fournisseur de services et/ou d'un service auxiliaire s'effectue en outre en fonction du lieu géographique du dispositif (1) destiné à établir une liaison de communication, dans lequel le dispositif de traitement (2) est conçu de manière à ce que le lieu géographique du dispositif (1) destiné à établir une liaison de communication est obtenu par l'intermédiaire de l'enregistrement du dispositif (4) destiné à identifier un utilisateur sur un réseau de communication.

12. Dispositif selon la revendication 11, **caractérisé en ce que** la position est déterminée par l'intermédiaire de l'enregistrement sur une partie du réseau de communication qui dépend du lieu géographique.

13. Procédé selon l'une quelconque des revendications 9 à 12, **caractérisé en ce que** le dispositif (1) destiné à établir une liaison de communication est connecté à au moins un générateur de données de mesure et/ou d'informations (3a...3n) directement et/ou par l'intermédiaire du dispositif de traitement (2) et **en ce que** le dispositif de traitement (2) est conçu de manière à ce que la sélection de l'identifiant d'abonné de numérotation s'effectue en outre en fonction des données d'au moins un générateur de données de mesure et/ou d'informations (3a...3n).

14. Procédé selon l'une quelconque des revendications 9 à 13, **caractérisé en ce que** le dispositif (1) destiné à établir une liaison de communication est connecté à au moins un générateur de données de mesure et/ou d'informations (3a...3n) directement et/ou par l'intermédiaire du dispositif de traitement (2) et **en ce que** le dispositif de traitement (2) est conçu de manière à ce qu'une sélection automatique d'un identifiant d'abonné et à ce qu'un établissement automatique d'une liaison de communication vers l'identifiant d'abonné numéroté soient effectués en fonction de données de l'au moins un générateur de données de mesure et/ou d'informations (3a...3n).

15. Dispositif selon l'une quelconque des revendications 9 à 14, **caractérisé en ce que** le dispositif (1) destiné à établir une liaison de communication comporte au moins un élément d'actionnement manuel (8, 9) et/ou est directement ou indirectement connecté à celui-ci et à ce qu'une sélection automatique d'un identifiant d'abonné et un établissement automatique d'une liaison de communication vers l'identifiant d'abonné numéroté soient effectués en fonction de l'actionnement de l'élément d'actionnement (8, 9).

16. Dispositif selon la revendication 13 ou 14, **caractérisé en ce que** des données de l'au moins un générateur de données de mesure et/ou d'informations (3a...3n) sont envoyées, après un établissement automatique de la liaison de communication, au fournisseur de services et/ou au service auxiliaire et/ou **en ce qu'**une liaison de communication vocale est établie.

17. Dispositif selon l'une quelconque des revendications 9 à 16, **caractérisé en ce qu'**il est prévu dans un véhicule automobile.

18. Dispositif selon la revendication 17, **caractérisé en ce qu'**au moins un dispositif destiné à détecter un accident routier est prévu en tant que générateur de données de mesure et/ou d'informations (3a) .

19. Dispositif selon la revendication 17 ou 18, **caractérisé en ce que** le dispositif (1) destiné à établir une liaison de communication est un téléphone radio portatif disposé dans un dispositif d'enregistrement (6) et **en ce que** le dispositif d'enregistrement (6) comporte l'au moins un élément d'actionnement (8, 9) destiné à déclencher manuellement une sélection automatique de l'identifiant d'abonné et un établissement automatique d'une liaison de communication vers l'identifiant d'abonné sélectionné.
